# EUROPÄISCHE PATENTSCHRIFT

(11) **EP 3 126 698 B1**
(45) Veröffentlichungstag und Bekanntmachung des Hinweises auf die Patenterteilung: **10.03.2021**
(21) Anmeldenummer: 15716419.5
(22) Anmeldetag: 10.03.2015
(51) Int. Cl.: F16D 48/02, F16D 25/00

(54) **KUPPLUNGSBETÄTIGUNGSVORRICHTUNG**
CLUTCH ACTUATION DEVICE
DISPOSITIF D'ACTIONNEMENT D'EMBRAYAGE

(30) Priorität: 31.03.2014 DE 102014205961
(43) Veröffentlichungstag der Anmeldung: 08.02.2017
(73) Patentinhaber: Schaeffler Technologies AG & Co. KG, 91074 Herzogenaurach (DE)
(72) Erfinder: GULDENSCHUH, Dominik, 79115 Freiburg (DE); HONSELMANN, Sebastian, 77886 Lauf (DE)
(86) Internationale Anmeldenummer: PCT/DE2015/200137
(87) Internationale Veröffentlichungsnummer: WO 2015/149770

(56) Entgegenhaltungen:
- DE-A1- 3 237 723
- DE-A1- 4 121 016
- DE-A1- 4 125 162
- DE-A1- 10 201 306

## Beschreibung

Die Erfindung betrifft eine Kupplungsbetätigungsvorrichtung, insbesondere für ein Kraftfahrzeug.

Eine Kupplungsbetätigungsvorrichtung wird im Antriebsstrang eines Kraftfahrzeuges zur Betätigung einer Fahrzeugkupplung eingesetzt. Bekannt ist, dass mittels der Kupplungsbetätigungsvorrichtung mit einem Geberzylinder und einem Nehmerzylinder unter Verwendung mechanischer Komponenten, wie beispielsweise einem Ausrücklager und einer Kupplungstellerfeder, die Fahrzeugkupplung betätigt werden kann. Typischerweise wird der mit der Kupplung verbundene Nehmerzylinder durch den Geberzylinder betätigt, wobei die Druckräume des Nehmer- und des Geberzylinders über eine Druckleitung, beispielsweise eine hydraulische Druckleitung, miteinander verbunden sind. Ein Kolben des Geberzylinders wird typischerweise durch ein Pedal, beispielsweise ein Fußpedal, mit einer Druckkraft beaufschlagt. Diese Druckkraft erzeugt einen Druck in der Kupplungsbetätigungsvorrichtung, mit dem der Nehmerzylinder und schließlich die Fahrzeugkupplung betätigt werden.

Aus dem Dokument DE 10 2013 214 204 A1 ist eine Kupplungsbetätigungsvorrichtung bekannt, die einen Geberzylinder, einen Nehmerzylinder und eine diese verbindende Druckleitung aufweist, wobei in der Druckleitung eine Übersetzungseinrichtung, beispielsweise eine hydraulische Übersetzungseinrichtung, angeordnet ist, die eine veränderbare Übersetzung von Druck bzw. Volumenstrom zwischen dem Geberzylinder und dem Nehmerzylinder bewirkt.

Aus der DE 102 01 306 A1 ist eine Kupplungsbetätigungsvorrichtung nach dem Oberbegriff des Anspruchs 1 bekannt. Jene Kupplungsbetätigungsvorrichtung ist dafür ausgelegt, eine manuelle Kupplungsbetätigung im Notfall zuzulassen, wenn die automatische Kupplungsbetätigung nicht arbeitet. Weiterer Stand der Technik ist in der DE 41 25 162 A1, der DE 41 21 016 A1 sowie der DE 32 37 723 A1 offenbart.

Eine Aufgabe der Erfindung ist es eine verbesserte Kupplungsbetätigungsvorrichtung zu schaffen.

Diese Aufgabe wird mit einer Kupplungsbetätigungsvorrichtung mit den Merkmalen von Anspruch 1 gelöst.

Ein Ausführungsbeispiel der Erfindung betrifft eine Kupplungsbetätigungsvorrichtung, insbesondere für ein Kraftfahrzeug. Die Kupplungsbetätigungsvorrichtung weist einen Geberzylinder aufweisenden Geber, einen einen Nehmerzylinder aufweisenden Nehmer, eine den Geberzylinder und den Nehmerzylinder verbindende Druckleitung und ein mit der Druckleitung verbundenes Reservoir auf, wobei in der Druckleitung eine Automatisierungseinrichtung angeordnet ist. Die Automatisierungseinrichtung kann in einen bestehenden Antriebsstrang eines Kraftfahrzeuges, insbesondere in eine an sich bekannte Kupplungsbetätigungsvorrichtung eingebaut werden, indem die vorhandene Druckleitung zwischen dem Geber und dem Nehmer aufgetrennt wird und die Automatisierungseinrichtung zwischen zwei Teildruckleitungen angeordnet und mit diesen fluidisch verbunden wird. Es können noch weitere Anschlussleitungen an die Automatisierungseinrichtung vorgesehen sein. Die Automatisierungseinrichtung kann bevorzugt in einem Kupplungsausrücksystem eines manuellen Schaltgetriebes eingesetzt werden. Die Automatisierungseinrichtung ermöglicht dabei ein automatisiertes Anfahren für ein Kraftfahrzeug mit einem manuellen Schaltgetriebe. Die Kupplungsbetätigungsvorrichtung kann eine hydraulische Kupplungsbetätigungsvorrichtung sein. Der Nehmerzylinder kann mit der Kupplungsbetätigungsvorrichtung sowohl manuell als auch automatisiert mittels der Automatisierungseinrichtung betätigt werden. Hierbei kann der Fahrer jederzeit durch Drücken des Kupplungspedals eingreifen und die Automatisierungseinrichtung deaktivieren.

Die Automatisierungseinrichtung weist zwei voneinander getrennte Fluidkreisläufe auf, wobei ein erster Fluidkreislauf für eine manuelle Kupplungsbetätigung eingerichtet ist und der erste Fluidkreislauf zusammen mit einem zweiten Fluidkreislauf für eine automatisierte Kupplungsbetätigung eingerichtet ist. Im automatisierten Betrieb werden hierbei der erste Fluidkreislauf und der zweite Fluidkreislauf eingesetzt. Hierdurch kann ein Öffnen und/oder Schließen der Kupplung durch zwei unterschiedliche Teilsysteme jeweils mittels in unterschiedlichen Fluidkreisläufen aufgebautem Druck automatisiert ermöglicht werden. Dadurch kann eine Komfortsteigerung für den Fahrer, insbesondere in einer Stau-Situation in einer Stopp/Go-Situation und/oder einer Anfahrsituation am Berg mit einer ansteigenden Fahrbahnsituation, erzielt werden. Die Automatisierungseinrichtung kann außerdem ein sanfteres Anfahren in den vorstehend beschriebenen Situationen ermöglichen.

In der Ausgestaltung der Kupplungsbetätigungsvorrichtung weist die Automatisierungseinrichtung eine erste Druckkammern mit einem ersten Druckkolben und eine zweite Druckkammer mit einem zweiten Druckkolben auf, wobei die erste und die zweite Druckkammer miteinander verbunden sind. Die erste Druckkammer ist in einem ersten Zylinder ausgebildet. Die zweite Druckkammer ist in einem zweiten Zylinder ausgebildet. In dem ersten Zylinder ist hierbei eine dritte Druckkammer ausgebildet, wobei die zweite Druckkammer und die dritte Druckkammer durch den zweiten Kolben getrennt sind. Der zweite Kolben ist hierbei linear in dem zweiten Zylinder bewegbar. Im manuellen Betrieb wird ein von dem Geberzylinder aufgebauter Druck in einem Fluid direkt in die dritte Druckkammer geleitet und das Fluid kann aus der dritten Druckkammer in den Nehmerzylinder strömen. Im automatisierten Betrieb sind die erste Druckkammer, die zweite Druckkammer und die dritte Druckkammer einbezogen, wobei demzufolge der erste Fluidkreislauf und der zweite Fluidkreislauf verwendet werden können.

Der erste Druckkolben ist durch eine Kraftquelle aktivierbar. Hierbei kann die Kraftquelle ein Motor, insbesondere ein Elektromotor, und/oder eine Pumpe sein.

Die Automatisierungseinrichtung weist mindestens zwei Anschlüsse an den Geberzylinder und einen Anschluss an den Nehmerzylinder auf. Der erste Anschluss an den Geberzylinder und der zweite Anschluss an den Geberzylinder können hierbei mittels einer Leitung verbunden sein. In einer Ausgestaltung der Automatisierungsvorrichtung kann ein dritter Anschluss an den Geberzylinder kann vorgesehen sein, falls die Automatisierungseinrichtung eine Drossel aufweist. Hierbei können dann die drei Anschlüsse außerhalb der Automatisierungseinrichtung mit einer Leitung verbunden sein. Bevorzugt sind drei Anschlüsse für ein Reservoir vorgesehen.

In einer Ausgestaltung der hydraulischen Kupplungsbetätigung ist in der Automatisierungseinrichtung mindestens ein Überdruckventil vorgesehen. Bevorzugt ist das mindestens eine Überdruckventil ein erstes Überdruckventil und es ist ein zweites Überdruckventil vorgesehen. Hierbei kann das erste Überdruckventil einen Überdruck im Gesamtsystem verhindern und dafür sorgen, dass beim Starten der Automatisierungseinrichtung das in diesem Fall zu viel vorhandene Fluid abgeführt wird. Das zweite Überdruckventil kann so eingerichtet sein kann, dass die Automatisierungseinrichtung vom Fahrer übersteuert werden kann. Mittels des zweiten Überdruckventils kann die Automatisierungseinrichtung drucklos, insbesondere in einem drucklosen Modus, betrieben werden. Somit kann der Fahrer jederzeit das Kupplungspedal zum Übersteuern drücken und somit die Kupplung wieder manuell öffnen.

Bevorzugt ist in der Automatisierungseinrichtung ein Ventil vorgesehen, insbesondere ein zusätzliches Ventil, welches elektrisch öffenbar und/oder schließbar ist. Das Ventil kann geöffnet werden, wenn das Kupplungspedal vom Fahrer gedrückt wird. Dadurch kann die Automatisierungseinrichtung deaktiviert werden. Hierdurch können bei einer, beispielsweise manuellen, Übersteuerung der Druckkolben des automatisierten Systems, diese wieder in die Ausgangsstellung zurück gedrückt werden. Dadurch können die Kolben wieder zurückgefahren werden. Die Automatisierungseinrichtung kann deaktiviert werden und sich wieder in ihrem Ausgangszustand befinden. Zusätzlich kann vorgesehen sein, an dem zusätzlichen Ventil einen Anschluss zu dem Geberzylinder vorzusehen.

Bevorzugt ist ein weiteres Ventil vorgesehen, mittels dem die Automatisierungseinrichtung drucklos schaltbar ist. Hierbei ist insbesondere der Druck in der ersten Druckkammer und der zweiten Druckkammer ausgeglichen. Dies ist vorteilhaft, da bei einer manuellen Übersteuerung die Kolben der Automatisierungseinrichtung in ihre Ausgangslage zurück gedrückt werden können.

Insgesamt weist die Automatisierungseinrichtung bevorzugt vier Ventile auf. Bevorzugt sind die vier Ventile elektrisch ansteuerbar.

Bevorzugt ist ein Drosselventil vorgesehen, welches mit der dritten Druckkammer verbunden ist und in Fluidverbindung steht. Das Drosselventil kann mittels einer Leitung im eingebauten Zustand mit dem Geberzylinder verbunden sein.

In einer Ausgestaltung ist eine an dem zweiten Kolben zwischen Dichtungen angeordnete Druckkammer vorgesehen. An der am zweiten Kolben angeordneten Druckkammer kann ein Anschluss an das Reservoir vorgesehen sein. Der Anschluss kann freigegeben werden, indem der zweite Kolben verfahren wird. Hierbei kann ein Volumen der zweiten Druckkammer vergrößert werden und gleichzeitig ein Volumen der dritten Druckkammer verringert werden.

Die Aufgabe wird ebenfalls durch ein Schaltgetriebe, insbesondere für ein Kraftfahrzeug, mit einer erfindungsgemäßen Kupplungsbetätigungsvorrichtung gelöst.

Weitere vorteilhafte Ausgestaltungen und die Funktionsweise der Automatisierungseinrichtung sind durch die nachfolgende Figurenbeschreibung und durch die Unteransprüche beschrieben.

Die Erfindung wird nachfolgend auf der Grundlage zumindest eines Ausführungsbeispiels anhand der Figuren der Zeichnung näher erläutert. Es zeigen:
- Fig. 1: Komponenten einer Kupplungsbetätigungsvorrichtung gemäß dem Stand der Technik,
- Fig. 2: die Kupplungsbetätigungsvorrichtung mit einem Reservoir gemäß dem Stand der Technik,
- Fig. 3: eine Automatisierungseinrichtung gemäß der Erfindung, die in einer Druckleitung angeordnet ist,
- Fig. 4: die Automatisierungseinrichtung von Figur 3 in vergrößerter Darstellung,
- Fig. 5: die Automatisierungseinrichtung von Figur 4 in einem nicht eingeschalteten Zustand,
- Fig. 6: die Automatisierungseinrichtung von Figur 4 in einem eingeschalteten Zustand,
- Fig. 7: die Automatisierungseinrichtung von Figur 4, wobei ein Kolbenverfahrweg beim Öffnen der Kupplung dargestellt ist,
- Fig. 8: die Automatisierungseinrichtung von Figur 4 mit einem geöffneten Abfluss für ein Fluid in ein Reservoir,
- Fig. 9: die Automatisierungseinrichtung von Figur 4 in einem weiteren Betriebsmodus,
- Fig. 10: die Automatisierungseinrichtung von Figur 4 in einem weiteren Betriebsmodus,
- Fig. 11: die Automatisierungseinrichtung von Figur 4 in einem weiteren Betriebsmodus,
- Fig. 12: eine weitere Ausführungsform der Automatisierungseinrichtung,
- Fig. 13: die Automatisierungseinrichtung von Figur 4 mit angeschlossenen Leitungen in einer ersten Ausführungsform,
- Fig. 14: die Automatisierungseinrichtung von Figur 12 mit angeschlossenen Leitungen.

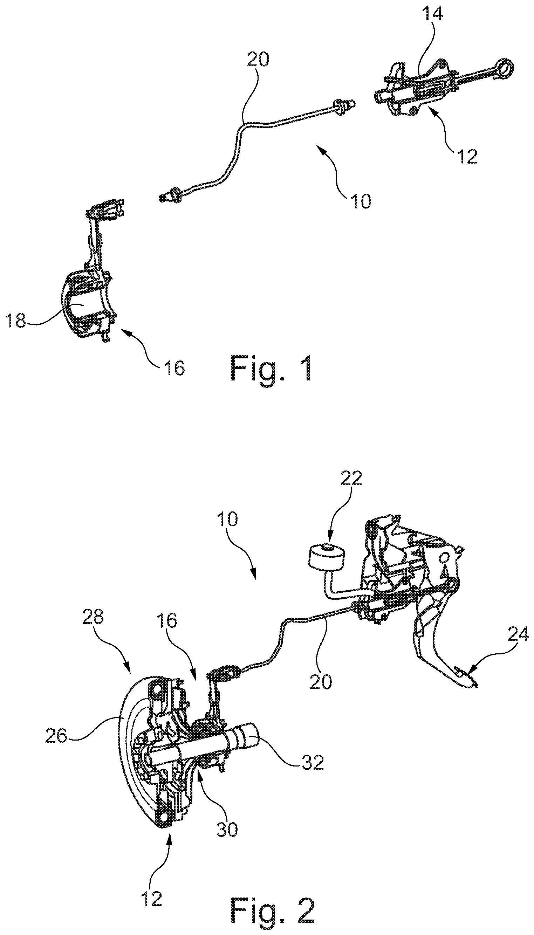

Figur 1 zeigt eine Kupplungsbetätigungsvorrichtung 10 gemäß dem Stand der Technik, die einen Geber 12 mit einem Geberzylinder 14 und einen Nehmer 16 mit einem Nehmerzylinder 18 sowie eine Druckleitung 20 aufweist, wobei der Geber 12, der Nehmer 16 und die Druckleitung 20 nicht verbunden sind und als Einzelkomponenten gezeigt sind.

Figur 2 zeigt die Kupplungsbetätigungsvorrichtung 10 gemäß dem Stand der Technik in montiertem Zustand mit einem Reservoir und einem Kupplungspedal 24. Gleiche Gegenstände sind mit den gleichen Bezugszeichen wie in Figur 1 bezeichnet. Ferner ist der Nehmer 16 mit einem Zweimassenschwungrad 26 einer Kupplung 28 verbunden. Eine Tellerfeder 30 ist an der Kupplung 28 angeordnet und die Kupplung 28 ist mit einer Getriebeeingangswelle 32 verbunden. Die Funktion der Kupplungsbetätigungsvorrichtung 10 wird nachfolgende naher erläutert. Durch Betätigen des Kupplungspedals 24 wird der Geberzylinder 14 eingefahren, wodurch das in dem Geberzylinder 14 befindliche Fluid durch die Druckleitung 20 gedrückt wird und somit ein Ausfahren des Nehmerzylinders 18 bewirkt wird. Der Nehmerzylinder 18 drückt entweder indirekt über einen Hebel mit angebrachtem Ausrücklager oder direkt über das Ausrücklager selbst gegen eine Tellerfeder der Kupplung 28. Dadurch wird die Kupplung 28 geöffnet und ein Kraftfluss zwischen einem Motor des Kraftfahrzeugs und einem Getriebe des Kraftfahrzeugs wird unterbrochen. Durch die Unterbrechung des Kraftflusses ist das Einlegen eines Ganges ermöglicht. Nach dem Einlegen des gewünschten Gangs, kann der Fahrer das Kupplungspedal 24 zurück in dessen Ausgangsposition fahren lassen, indem der manuelle Druck auf das Kupplungspedal 24 verringert wird. Sobald der Fahrer den Druck auf das Kupplungspedal 24 minimiert, kann durch einen Gegendruck der Tellerfeder der Kupplung 28 das Ausrücklager und somit der Nehmerzylinder 18 zurück in die Ausgangsposition gedrückt werden. Dadurch kann der Druck der Tellerfeder mittels dem in der Druckleitung befindlichen Fluid auf den Geberzylinder 14 übertragen werden, wodurch der Geberzylinder 14 wieder in dessen Ausgangsposition zurück fahren kann. Dadurch wird das Kupplungspedal 24 wieder in seine Ausgangsposition verlagert.

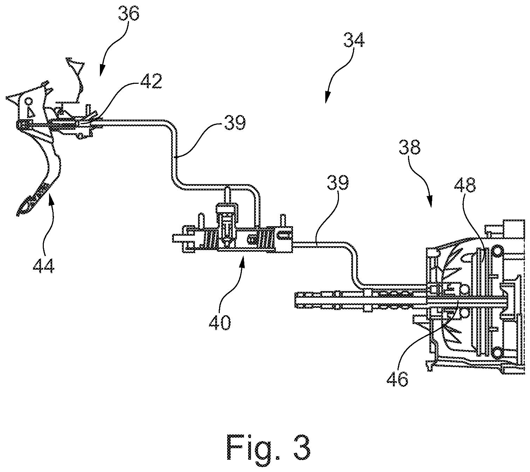

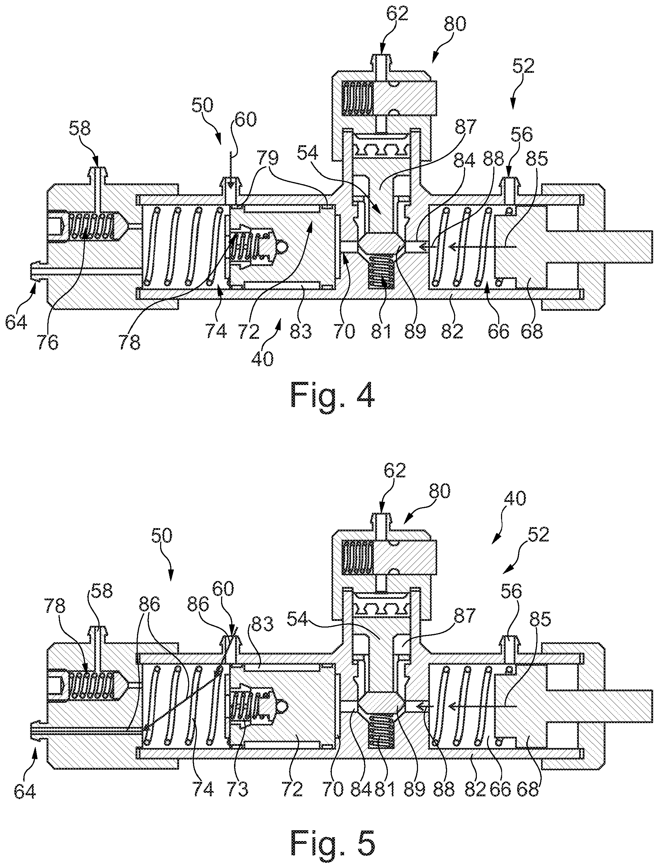

Figur 3 zeigt eine erfindungsgemäße Kupplungsbetätigungsvorrichtung 34 mit einem Geber 36, einem Nehmer 38 und einer diese verbindenden Druckleitung 39, in die eine Automatisierungseinrichtung 40 angeordnet ist. Der Geber 36 weist einen Geberzylinder 42 auf und ist mit einem Kupplungspedal 44, insbesondere einem Fußpedal 44, verbunden. Der Nehmer 38 weist einen Nehmerzylinder 46 auf und ist mit einer Kupplung 48 verbunden. Zur detaillierteren Beschreibung der Automatisierungseinrichtung 40 wird auf die Beschreibung zu Figur 4 verwiesen.

Figur 4 zeigt die Automatisierungseinrichtung 40 von Figur 3 in schematischer Darstellung im Längsschnitt. Die Automatisierungseinrichtung 40 weist zwei getrennte Fluidkreisläufe 50 und 52 auf, wobei die Fluidkreisläufe 50 und 52 jeweils nachfolgend näher beschriebene Anschlusskanäle, Druckräume und Ventile aufweisen. Der erste Fluidkreislauf 50 bildet hierbei eine manuelle Kupplungsbetätigung aus. Der erste Fluidkreislauf 50 und der zweite Fluidkreislauf 52 bilden zusammen eine automatisierte Kupplungsbetätigung aus. Zum Anschluss an ein nicht dargestelltes Reservoir sind drei Anschlüsse 54, 56 und 58 vorgesehen. Ferner sind zwei Anschlüsse 60 und 62 an den Geber 36 vorgesehen. Die Automatisierungseinrichtung 40 kann an einem Anschluss 64 mit dem Nehmer 38 verbunden werden.

Die Automatisierungseinrichtung 40 weist einen ersten Druckraum 66 auf, der auch als Druckkammer 66 bezeichnet wird, in dem ein erster Kolben 68 verschiebbar angeordnet ist, der mit einer nicht dargestellten Kraftquelle verbunden ist oder verbindbar ist. Ferner ist ein zweiter Druckraum 70 vorgesehen, der auch als Druckkammer 70 bezeichnet wird, in dem ein zweiter Kolben 72 hineinragend und verschiebbar angeordnet ist. Der erste Kolben 68 und der zweite Kolben 72 sind axial verschiebbar. Die Druckräume 66 und 70 sind dem automatisierten Fluidkreislauf 52 zugehörig.

Die Automatisierungseinrichtung 40 weist ferner einen dritten Druckraum 74 auf, der auch als manuelle Druckkammer 74 bezeichnet wird, der dem ersten Fluidkreislauf 50 zugeordnet ist und damit der Funktion der manuellen Kupplungsbetätigung. Der zweite Druckraum 70 und der dritte Druckraum 74 sind mittels eines zweiten Kolbens 72 getrennt. Das jeweilige Volumen des zweiten Druckraums 70 und des dritten Druckraums 74 sind hierbei gegenläufig veränderbar. Das bedeutet, wenn das Volumen des zweiten Druckraumes verkleinert wird, wird das Volumen des dritten Druckraums vergrößert.

Ferner weist die Automatisierungseinrichtung 40 ein erstes Überdruckventil 76 und ein zweites Überdruckventil 78 auf. Ein drittes Ventil 80 der Automatisierungseinrichtung 40 ist mit dem Anschluss 62 an den Geber 36 verbunden. Das dritte Ventil 80 ist bevorzugt ein elektrisch gesteuertes Ventil 80. Das Ventil 80 wird elektrisch geschaltet und kann somit elektrisch geöffnet und geschlossen werden, wenn der Fahrer das Kupplungspedal 44 drückt. Durch Drücken des Kupplungspedals 44 kann die Automatisierungseinrichtung 40 durch Öffnen des Ventils 80 deaktiviert werden. Ferner ist ein Absperrventil 81 vorgesehen. Mittels des Ventils 80 und/oder des Ventils 81 kann die Automatisierungseinrichtung 40 drucklos geschaltet werden und bei einer manuellen Übersteuerung kann beispielsweise der Kolben 68 wieder in eine Ausgangsposition zurück gedrückt werden.

Das Überdruckventil 76 kann verhindern, dass das beim Starten der Automatisierungseinrichtung 40 zu viel vorhandenes Fluid abgeführt wird, wobei das Fluid in ein nicht dargestellte Reservoir abgeführt werden kann. Mittels des Überdruckventils 78 kann erreicht werden, dass die Automatisierungseinrichtung 40 vom Fahrer übersteuert werden kann. Der Fahrer kann somit jederzeit das Kupplungspedal 44 drücken und die Kupplung 48 wieder öffnen. Durch das zweite Überdruckventil 78 kann die Automatisierungseinrichtung 40 drucklos betrieben werden.

Die Automatisierungseinrichtung 40 weist ferner ein Gehäuse 82 auf, in dem die Druckräume 66, 70 und 74 angeordnet sind und an welchem die Anschlüsse 56, 58, 60, 62 und 64 ausgebildet sind. Die Druckräume 66 und 70 sind fluidisch miteinander verbunden. Die Verbindung kann durch einen Kanal 84 realisiert werden, wodurch ermöglicht ist, dass das Fluid von dem Druckraum 66 in die Druckkammer 70 strömen kann. Das Fluid kann so von dem zweiten Fluidkreislauf 52 in den ersten Fluidkreislauf 50 gelangen. Der Druckraum 70 kann durch den Kolben 72 unterteilt werden in eine erste Druckkammer 70 und in eine zweite Druckkammer 74. Somit befindet sich in der Druckkammer 74 auf der einen Seite des Kolbens 72 das Fluid im Fluidkreislauf 50 der manuellen Betätigung und auf der anderen Seite des Kolben 72 befindet sich das Fluid in dem automatisierten Fluidkreislauf 52, wobei die Druckkammer 70 mit dem Druckraum 66 durch den Kanal 84 fluidisch verbunden ist. Die Druckkammern 70 und 74 bilden hierbei einen gemeinsamen Druckraum (nicht mit einem Bezugszeichen bezeichnet) mit zwei Druckkammern 70, 74 aus. Der Fluidkreislauf 52 weist somit zwei Druckkammern 66 und 70 auf, wobei der erste Fluidkreislauf 50 eine Druckkammer 74 aufweist.

Der Kolben 68, welcher der erste Kolben des Fluidkreislaufs 52 der Automatisierungseinrichtung 40 ist, kann durch seinen Verfahrweg, der durch den Pfeil 85 dargestellt ist, den Druck für die automatisierte Betätigung der Kupplung 48 bereitstellen, und kann durch die nicht dargestellte Kraftquelle betätigt werden. Die Kraftquelle kann ein Motor, insbesondere ein Elektromotor, und/oder eine Pumpe sein.

Am Kolben 72 ist eine weitere Druckkammer 83 vorgesehen, die mittels Dichtungen 79 von den Druckkammern 74 und 70 abgetrennt ist und über den Anschluss 60 mit Fluid befüllbar ist. Ferner ist eine Druckkammer 87 vorgesehen, der über den Anschluss 62 mit Fluid befüllbar ist. Am Ventil 81 ist ein Kolben 89 angeordnet, der an die Druckkammer 87 angrenzt.

Die Funktionsweise der Automatisierungseinrichtung 40 soll nachfolgend näher anhand der in den Figuren 5, 6, 7, 8 9, 10, 11 und 12 dargestellten Automatisierungseinrichtung 40 und einer modifizierten Automatisierungseinrichtung 140 detaillierter beschrieben werden. Gleiche Gegenstände sind mit den gleichen Bezugszeichen wie in Figur 4 bezeichnet und es wird auf die Beschreibung zu Figur 4 verwiesen.

Figur 5 zeigt hierbei die Automatisierungseinrichtung 40 in einem deaktivierten Modus. Ist die Automatisierungseinrichtung 40 deaktiviert, strömt das beaufschlagte Fluid bei der manuellen Betätigung des Kupplungspedals 44 von dem Geberzylinder 42 kommend durch den Anschluss 60 in die Druckkammer 74 hinein und durch den Anschluss 64 zum Nehmer 38, insbesondere zum Nehmerzylinder 46. Aus Gründen der Übersichtlichkeit, sind in Figur 5 und den nachfolgenden Figuren nur die für die jeweilige Funktion notwendigen Gegenstände mit Bezugszeichen versehen. Der Weg des Fluids ist mit den Pfeilen 86 bezeichnet. Beim anschließenden Schließen der Kupplung 48 strömt das Fluid den mit den Pfeilen 86 bezeichneten Weg wieder zurück. Somit zeigt Figur 5 die Automatisierungseinrichtung 40 im Modus: "Deaktiviert".

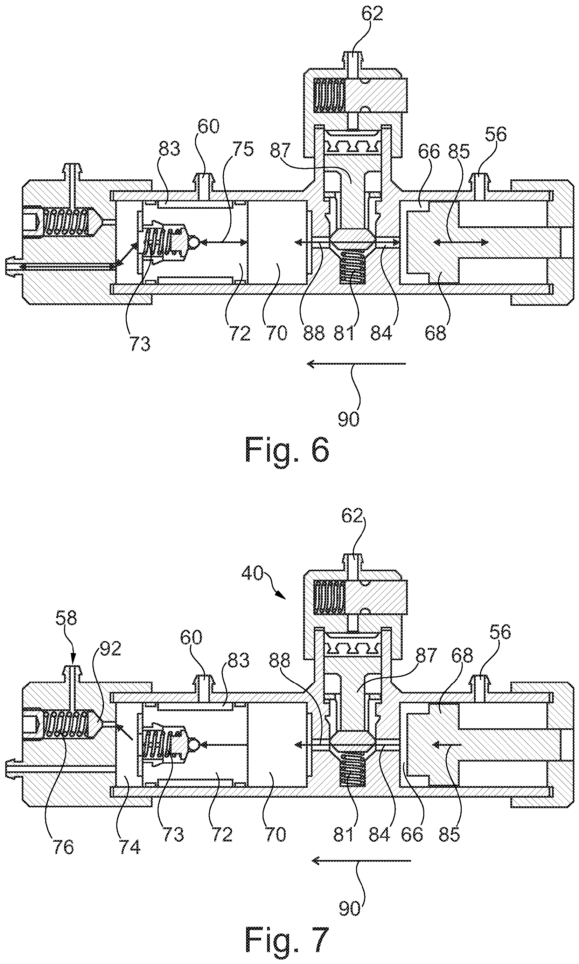

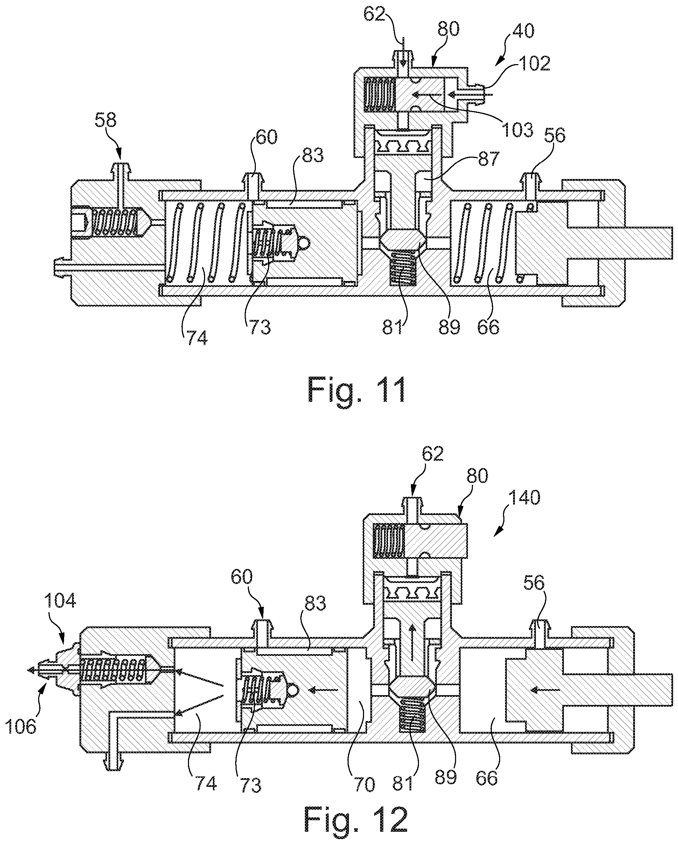

Figuren 6, 7, 8, 9, 10, 11 und 12 zeigen die Automatisierungseinrichtung 40 und 140 (Figur 12) in einem eingeschalteten oder aktivierten Modus. Die Möglichkeit des Einschaltens ist hierbei nur gegeben, wenn sich das Kraftfahrzeug in einer Fahrsituation befindet, in der sich der Rückwärtsgang oder der erste Gang einlegen lassen. Dies ist der Fall beim Stillstand oder beim langsamen Rollen des Kraftfahrzeugs und wenn die Kupplung geöffnet ist. Eine geöffnete Kupplung 48 kann beispielsweise vorliegen, wenn das Kupplungspedal 44 gedrückt ist.

Wird die Automatisierungseinrichtung 40 aktiviert, wird der Kolben 68, beispielsweise durch einen nicht dargestellten Elektromotor, verfahren. Dieser verschließt durch die Bewegung in Richtung des Pfeils 85 den Anschluss 56. Das Fluid kann nun durch den Kanal 84 in die Druckkammer 70 strömen, wobei der Kolben 68 das Fluid von der ersten Druckkammer 66 in die zweite Druckkammer 70 drückt. Die Druckkammer 70 ist dicht und es kann ein Druck aufgebaut werden. Der Pfeil 88 zeigt den Weg und die Strömungsrichtung des Fluids. Das Fluid wird hierbei an dem Absperrventil 81 vorbeiströmen. Dadurch wird der zweite Kolben 72 ebenfalls nach vorne in mit dem Pfeil 90 bezeichneter, axialer Richtung 90 gedrückt. Hierbei wird mittels des zweiten Kolbens 72 der Anschluss 60 geschlossen und die Verbindung zwischen dem Anschluss 60 und dem Druckraum 74 des manuellen Fluidkreislaufs 50 getrennt. Die Verbindung zwischen dem Geberzylinder 42 und dem Nehmerzylinder 46 ist unterbrochen und damit die Verbindung zwischen dem Kupplungspedal 44 und dem Nehmerzylinder 46. Diese Situation ist in Figur 6 dargestellt. Der Fahrer kann das Kupplungspedal 44 loslassen, ohne, dass die Kupplung 48 wieder schließen würde.

Die Kupplung 48 wird hierbei durch den Druck im manuellen Druckraum 74 offen gehalten, sodass das Kraftfahrzeug nicht ungewollt anfahren kann. Es kann kein Gang eingelegt werden. Will der Fahrer wieder manuell die Kupplung 48 betätigen und die Kupplung 48 schließen, muss das Kupplungspedal 44 wieder aktiv durch eine nicht dargestellte separate Einrichtung, beispielsweise eine Pumpe, zurückgeholt werden. Dies deshalb, da es sonst nicht möglich ist, das Kupplungspedal 44 zu treten und die Kontrolle über die Kupplung 48 wieder durch den Fahrer zu leisten. Zum Öffnen und Schließen der Kupplung 48 kann der Kolben 72 entsprechend der mit dem Pfeil 85 bezeichneten Richtung verfahren.

Der Druck in der Druckkammer 74 wird nun weiter erhöht, indem der Kolben 68 und/oder der Kolben 72 weiter in der mit dem Pfeil 90 bezeichneten Richtung fahren. In der Druckkammer 74 ist allerdings durch das ursprüngliche Drücken des Kupplungspedals 44 bereits ein Druck aufgebaut, der weiter erhöht wird. Wird der Druck zu groß, kann sich das Überdruckventil 76 öffnen und das überschüssige Fluid kann aus der Druckkammer 74 durch den Anschluss 58 strömen. Dadurch können die Kolben 68 und 72 komplett nach vorne bis an einen nicht dargestellten Anschlag fahren, wobei die Kupplung 48 geöffnet bleibt.

Figur 7 zeigt die Automatisierungseinrichtung 40 in einem Modus, bei dem das Überdruckventil 76 anspringt und das überschüssige Fluid durch den Anschluss 58 in das nicht dargestellte Reservoir gelangen kann. Gleiche Gegenstände sind mit den gleichen Bezugszeichen bezeichnet und in der Figur sind lediglich die für diesen Modus relevanten Gegenstände mit Bezugsziffern versehen. Der Weg des Fluids ist mit dem Pfeil 92 bezeichnet.

Fährt der Kolben 68 und somit auch der Kolben 72 wieder zurück, wird der Druck in der manuellen Druckkammer 74 verringert. Dadurch kann eine Tellerfeder der Kupplung 48 den Nehmerzylinder 46 wieder in die Ausgangsposition drücken. Dadurch wird das Fluid aus dem Nehmerzylinder 46 zurück in die Druckkammer 74 strömen. Somit ist die Druckkammer 74 stets mit Fluid gefüllt. Die Kupplung 48 ist wieder geschlossen und das Fahrzeug kann anfahren.

Drückt der Fahrer nun auf eine nicht dargestellte Bremse, lässt sich die Kupplung 48 jetzt auch wieder automatisch öffnen, indem der Kolben 68 wieder nach vorne fahren kann und dadurch das Fluid durch den Kolben 72 wieder aus der Druckkammer 74 in den Nehmerzylinder 46 gedrückt wird. Hierbei kann eine Verfahrgeschwindigkeit des ersten Kolbens 68 intelligent gesteuert werden, wobei die intelligente Steuerung auf verschiedene unterschiedliche Belastungs- und Fahrsituationen eingestellt ist. Dies kann in ähnlicher Weise wie beispielsweise das Steuern des Motors durch ein automatisches "Gas geben" in einem Tempomat-Modus erfolgen. Durch den Pfeil 94 ist angedeutet, dass es möglich ist, dass durch den Anschluss 60 Fluid aus dem Geberzylinder 42 in den Druckraum 74 gelangen kann und sich ein Druck aufbauen kann.

Drückt der Fahrer nun auf das Kupplungspedal 44, wird die Automatisierungseinrichtung 40 übersteuert und deaktiviert. Somit kann der Fahrer manuell einen anderen Gang einlegen und im manuellen Modus weiterfahren oder bei einem Stillstand des Fahrzeugs manuell Anfahren. Durch Drücken des Kupplungspedals 44 kann der Fahrer jederzeit, beispielsweise bei einer offensichtlichen Fehlfunktion, eingreifen und die Automatisierungseinrichtung 40 deaktivieren. Beispielsweise sollte das Fahrzeug, insbesondere die Automatisierungseinrichtung 40, in einer Situation die Kupplung 48 selbstständig ungewollt schließen, kann der Fahrer durch Treten des Kupplungspedals 44 die Kupplung manuell wieder öffnen.

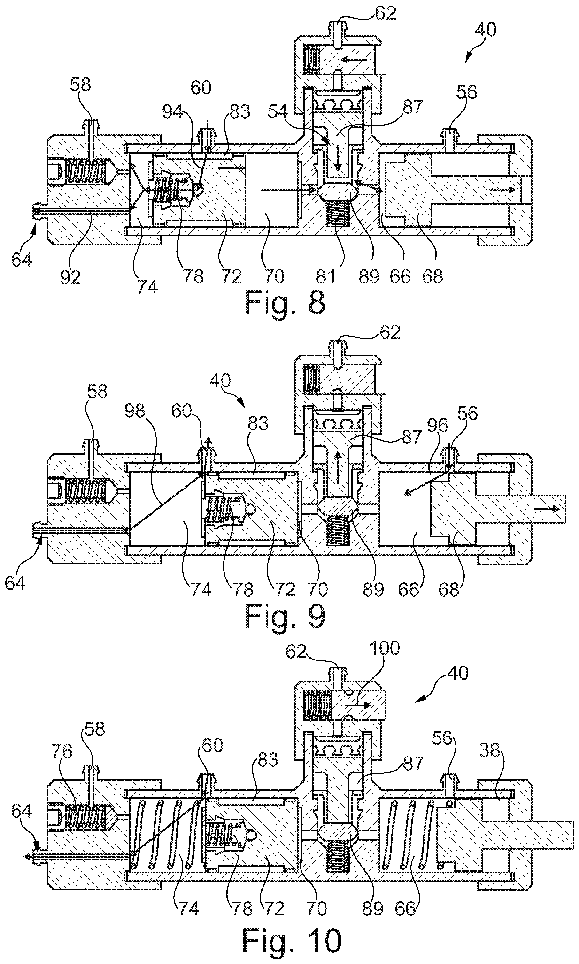

Ein weiterer möglicher Modus wird nachfolgend beschrieben. Wenn der Fahrer die Automatisierungseinrichtung 40 deaktiviert, indem er das Kupplungspedal 44 drückt und einen Gang einlegt, ist das Weiterfahren so möglich, als ob die Automatisierungseinrichtung 40 nicht aktiviert worden wäre. Dies wird realisiert, indem am Kolben 72 Dichtungen 79 angeordnet sind. Zwischen den Dichtungen 79 des Kolbens 72 ist eine Druckkammer 83 angeordnet, in der ein Druck aufgebaut werden kann. Drückt der Fahrer nun das Kupplungspedal 44, wird durch das vom Geberzylinder 42 kommende Fluid durch den Anschluss 60 Fluid in die Drucckammer 83 gelangen und es kann ein Druck aufgebaut werden. Ist der Druck hoch genug, öffnet sich das Überdruckventil 78 im Kolben 72 und gibt das Fluid unter dem Druck von der Druckkammer 83 in die Druckkammer 74 weiter. Somit erhöht sich in der Druckkammer 74 der Druck, dieser wird an den Nehmerzylinder 46 weitergegeben und die Kupplung 48 ist wieder geöffnet. Diese Situation ist in der in Figur 8 dargestellten Automatisierungseinrichtung 40 gezeigt.

Soll eine manuelle Betätigung, insbesondere ein manuelles Schließen der Kupplung 48, ermöglicht werden, wird die Automatisierungseinrichtung 40 wieder in eine Ausgangsposition gefahren. Hierbei detektiert ein nicht gezeigter Sensor die Bewegung im Kupplungspedal 44, wenn der Fahrer zur Deaktivierung das Kupplungspedal 44 drückt. Detektiert der Sensor ein Signal und ist gleichzeitig die Automatisierungseinrichtung 40 aktiviert, schaltet das Ventil 80 auf Durchfluss. Somit wird durch den Anschluss 62 gleichzeitig der Druck, der durch die Betätigung des Kupplungspedals 44 erzeugt wird, durch den Anschluss 60 in die Druckkammer 74 und in eine Druckkammer 87 geleitet. In der Druckkammer 87 drückt das Fluid auf einen Kolben 89, der das Absperrventil 81 betätigt.

Das Absperrventil 81 öffnet dadurch einen Durchfluss an dem Kolben 89 vorbei. Wobei das Fluid, welches den Verfahrweg der Kolben 68 und 72 beeinflusst und regelt, durch den Anschluss 54 in das Reservoir strömen kann. Die Druckkammer 87 zwischen den Kolben 68 und 72 ist drucklos und der Kolben 68 kann durch den nicht dargestellten Antrieb des Kolbens 68 wieder zurück verfahren werden.

Gleichzeitig wird der Kolben 72 durch den erhöhten Druck in der Druckkammer 74 ebenfalls in die Ausgangsposition verfahren werden. Dadurch ist ein manuelles Schließen der Kupplung 48 ermöglicht. Die Füllmenge zwischen den Kolben 68 und 72 kann dann wieder durch den Anschluss 56, der auch als Schnüffelbohrung bezeichnet wird, auf den richtigen und benötigten Stand erfolgen. Die Fluidwege sind hierbei mit den Pfeilen 96 und 98 bezeichnet. Zusätzlich ist mit dem Pfeil 100 eine Bewegungsrichtung am dritten Ventil 80, dem elektrisch ansteuerbaren Ventil, eingezeichnet. Die vorstehend beschriebene Situation ist in der Automatisierungseinrichtung 40, die in den Figuren 9 und 10 dargestellt ist, gezeigt.

Im Folgenden wird beschrieben, wie die Automatisierungseinrichtung 40 in einer Ausfallsituation, bei der einzelne Komponenten der Automatisierungseinrichtung 40 ausgefallen sind, arbeitet.

Falls der Antrieb des Kolbens 68 ausfällt, kann der Fahrer durch Drücken des Kupplungspedals 44 eingreifen und die Kupplung 48 manuell öffnen. Der Kolben 72 wird dann ebenfalls verfahren und zurück in seine Ausgangsposition verfahren. Dadurch ist beim Ausfall des Antriebes des Kolbens 68 ein Weiterfahren mit manuellem Öffnen und Schließen der Kupplung 48 sichergestellt. Die Funktion des automatisierten Anfahrens ist allerdings nicht mehr gegeben.

Fällt das elektrisch regelbare Ventil 80 aus, können die Kolben 68 und 72 unter Umständen nicht richtig in ihre Ausgangslage zurückfahren. Hierdurch kann ein Sog entstehen, wenn der Kolben 68 zurückfährt, der den Kolben 72 mit zurückziehen würde. Somit kann ein normales manuelles Weiterfahren erst ermöglicht sein, wenn beide Kolben in ihre jeweiligen Ausgangspositionen gelangt sind. Dies kann eine Zeitverzögerung zur Folge haben, da je nach Geschwindigkeit des Antriebs des Kolbens 68 eine gewisse Zeit benötigt wird, bis der Kolben 68 wieder in seiner Ausgangslage zurück verfahren ist. Dadurch kann ein manuelles Schließen der Kupplung 48 und damit ein Weiterfahren möglicherweise erst mit einer kurzen Verzögerung nach dem manuellen Eingriff möglich sein. Der Fahrer kann aber auf jeden Fall die Kupplung 48 öffnen.

Das Absperrventil 81 bildet hierbei eine Absicherung für den Fall, falls zusätzlich zum Ausfall des Ventils 80, der Antrieb des Kolbens 68 ausfällt. In diesem Fall würde der Fahrer nicht mehr die Kupplung 48 schließen können und dadurch nicht weiterfahren können. Außerdem ist mittels des Absperrventils 81 eine Komforteinbuße durch die Verzögerung beim Schließen der Kupplung, die durch den Ausfall des Ventils 80 verursacht werden könnte, beseitigt.

Falls sowohl der Antrieb, als auch die Ventilsteuerung des Ventils 80 ausfallen sollten, werden die Kolben 68 und 72 nicht mehr zurückfahren. Der Fahrer kann die Kupplung 48 manuell öffnen, aber nicht mehr schließen. Dies deshalb, da der direkte Weg zwischen dem Anschluss 60, dem Anschluss zum Geber 12, und der Druckkammer 74 nicht wieder öffenbar ist. In diesem Fall bleibt das Kraftfahrzeug stehen und muss abgeschleppt werden.

Alternativ und um diese Situation zu umgehen, kann wie in der Ausführungsform in Figur 11 gezeigt, das Ventil 80 durch Druck betätigt werden. Hierzu ist ein Anschluss 102 vorgesehen. Der Anschluss 102 ist im eingebauten Zustand der Automatisierungseinrichtung 40 mit dem Geberzylinder 14 verbunden. Bei der Betätigung des Kupplungspedals 44 kann vom Geberzylinder Fluid durch den Anschluss 102 gelangen, einen Druck aufbauen und das Ventil in die mit dem Pfeil 103 bezeichnet Richtung verschieben, wobei dieses geöffnet werden kann. Damit ist ein Rücksetzen des Kolbens 72 realisierbar. Damit kann die Kupplung 48 manuell geschlossen werden. Allerdings wird hierbei eine größere Kraft beim Betätigen des Kupplungspedals 44 benötigt, da zusätzlich zur Kraft der Kupplung 48 auch die Kraft zum Schalten des Ventils 80 und des Ventils 81 benötigt wird.

Figur 12 zeigt eine modifizierte Automatisierungseinrichtung 140 mit modifiziertem Überdruckventil 76 bei dem eine Drossel 104 vorgesehen ist. Bis auf das zusätzliche Bauteil, die Drossel 104, sind alle Gegenstände mit denselben Bezugszeichen bezeichnet, wie in den Figuren 5, 6, 7, 8, 9, 10 und 11. Die Drossel 104 ist mit einer nicht dargestellten Leitung mit dem Geberzylinder 42 verbindbar. Diese Ausführungsform der Automatisierungseinrichtung 140 stellt eine Alternative zur Rückstellung des Kupplungspedals 44 mit einer Pumpe dar. Der Druck des Fluids, welcher bei den automatisierten Kolben 68 und 72 aus der Druckkammer 74 durch das Überdruckventil 76 abgelassen wird, kann hierbei genutzt werden. Die Drosselung des Fluids durch die Drossel 104 ist notwendig, damit das Kupplungspedal 44 nicht mit dieser großen Kraft in seine Ausgangsposition zurück verfährt, wodurch der Fahrer sich möglicherweise verletzten könnte.

Nach der Drosselung kann das Fluid in die Leitung zwischen dem Geberzylinder 36 und dem Anschluss 62 zurückströmen und somit das Kupplungspedal 44 zurückstellen. Das Fluid strömt dabei nicht in das Reservoir, wie bei der Automatisierungseinrichtung 40 ohne Drossel 104. Gleichzeitig strömt das Fluid allerdings durch den Anschluss 60 in die Druckkammer 83 zwischen den Dichtungen 79 des Kolbens 72. Das Fluid kann in der Druckkammer 83 bleiben, da weniger Druck aufgebaut ist als in der Druckkammer 74, durch welches das Ventil 78 im Kolben 72 geschlossen gehalten ist. Das Ventil 78 öffnet nur, wenn der Fahrer zum Eingreifen das Kupplungspedal 44 drückt und den Druck auf das Fluid zwischen den Dichtungen 79 weiter erhöht.

Falls der Geberzylinder 46 und die angeschlossenen Leitungen bei der Rückstellung des Kupplungspedals 44 (Pedalrückstellung) überfüllt sind und der Druck des Fluids darin zu groß geworden ist, kann dieser bei einer Endstellung des Kupplungspedals 44 durch den Anschluss 56 in das Reservoir entweichen.

Die Pedalrückstellung kann hierbei einmal beim Start der Automatisierungseinrichtung 140 erfolgen, da der Kolben 72 die überflüssige Fluidmenge in der Druckkammer 74 durch das Überdruckventil 76 entfernen kann und lediglich der benötigte Druck zum Öffnen des Ventils 80 entsteht. Danach kann beim automatisierten Öffnen und Schließen und dem damit verbundenen Verfahren der Kolben 68 und 72 kein hoher Druck mehr in der Druckkammer 74 entstehen, da das überschüssige Fluid beim Start ausgestoßen wurde.

Hierbei kann noch eine weitere Fehlfunktion der Automatisierungseinrichtung 140 auftreten, die wie nachfolgend beschrieben, verhindert werden kann. Diese Fehlfunktion kann beispielsweise auftreten, wenn der Fahrer bei der Rückstellung des Kupplungspedals 44 auf dem Pedal 44 stehen bleibt oder dieses verkantet. Dadurch kann das Kupplungspedal 44 nicht in seine Endposition fahren und der Druck in der Automatisierungseinrichtung 140, insbesondere im Geberzylinder 46 und in den Leitungen zu den Anschlüssen 60 und 62, wird immer weiter erhöht. Die Kolben 68 und 72 würden immer weiter nach vorne verfahren und das überschüssige Fluid würde ausgestoßen. Die Position des Kupplungspedals 44 wird bevorzugt mit nicht dargestellten Sensoren detektiert und überwacht. Wenn das Kupplungspedal 44 seine relative Lage nicht mehr ändert, werden die Kolben 68 und 72 am weiteren Verfahren gestoppt. Dies solange, bis die relative Lage des Pedals 44 wieder verändert wird.

Zusätzlich, um einen möglichen Ausfall der Sensoren zu kompensieren, kann ein weiteres nicht dargestelltes Überdruckventil vorgesehen sein. Dieses zusätzliche Überdruckventil ist so eingestellt, dass es bei einem sehr hohen Druck, der größer als die üblichen Drücke in der Automatisierungseinrichtung 140 ist, öffnet. Das zusätzliche Überdruckventil kann bevorzugt mit dem Reservoir verbunden sein. Hierdurch kann ein Bersten der Automatisierungseinrichtung 140 verhindert werden. Danach muss die Automatisierungseinrichtung 140 allerdings beim nächsten Start wieder durch den Anschluss 56 komplett gefüllt werden.

Durch die beschriebenen Maßnahmen ist sichergestellt, dass die Kupplung 48 niemals öffnet und/oder schließt, solange das Kupplungspedal 44 nicht in der Endposition ist.

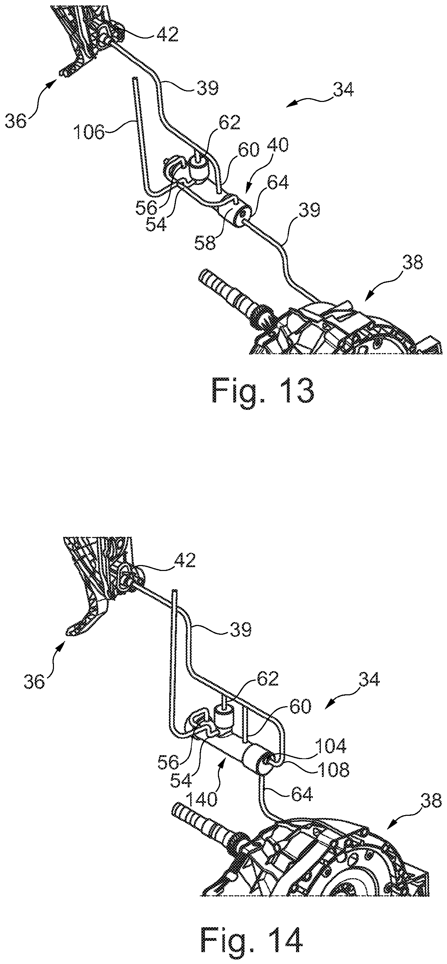

Figur 13 zeigt die Kupplungsbetätigungsvorrichtung 34 mit der Automatisierungseinrichtung 40 in einem ersten Verschaltungsmodus der Anschlüsse 54, 56, 58, 60, 62 und 64. Die Druckleitung 39 weist eine Leitungsabzweigung 39 zum Anschluss 62 auf. Ferner ist eine Leitung zur Verbindung der Anschlüsse 58 und 56 vorgesehen. Eine Leitung 106 ist zur Verbindung mit dem nicht dargestellten Reservoir vorgesehen.

Figur 14 zeigt die Kupplungsbetätigungsvorrichtung 34 mit der Automatisierungseinrichtung 140 in einer zweiten Verschaltungsanordnung. Die Automatisierungseinrichtung 140 weist die in Figur 12 dargestellte zusätzliche Drosseleinrichtung 104 auf, die mit einem Anschluss 108 an die Leitung 39 zum Geberzylinder 42 angeschlossen ist.

In den Figuren 3 bis 14 sind gleiche Gegenstände mit den gleichen Bezugszeichen bezeichnet. Da die Automatisierungseinrichtung 40 in der in der in den Figuren 12 und 14 gezeigten Ausführungsform sich von den der Automatisierungseinrichtung 40 durch das hinzugefügte Drosselventil 104 unterscheidet, ist diese modifizierte Automatisierungseinrichtung mit der Bezugsziffer 140 bezeichnet.

### Bezugszeichenliste

- 10: Kupplungsbetätigungsvorrichtung
- 12: Geber
- 14: Geberzylinder
- 16: Nehmer
- 18: Nehmerzylinder
- 20: Druckleitung
- 22: Reservoir
- 24: Kupplungspedal
- 26: Zweimassenschwungrad
- 28: Kupplung
- 30: Tellerfeder
- 32: Getriebeeingangswelle
- 34: Kupplungsbetätigungsvorrichtung
- 36: Geber
- 38: Nehmer
- 39: Druckleitung
- 40: Automatisierungseinrichtung
- 42: Geberzylinder
- 44: Kupplungspedal
- 46: Nehmerzylinder
- 48: Kupplung
- 50: erster Fluidkreislauf
- 52: zweiter Fluidkreislauf
- 54: Anschluss an das Reservoir
- 56: Anschluss an das Reservoir
- 58: Anschluss an das Reservoir
- 60: Anschluss an den Geber
- 62: Anschluss an den Geber
- 64: Anschluss an den Nehmer
- 66: Druckkammer, Druckraum
- 68: Kolben
- 70: Druckkammer, Druckraum
- 72: Kolben
- 74: Druckkammer, Druckraum
- 76: Überdruckventil
- 78: Überdruckventil
- 79: Dichtung, Dichtungen
- 80: elektrisch ansteuerbares Ventil
- 81: Absperrventil
- 82: Gehäuse
- 83: Druckkammer, Druckraum
- 84: Kanal, Fluidkanal
- 85: Pfeil
- 86: Pfeil, der den Pfad des Fluids darstellt
- 87: Druckkammer, Druckraum
- 88: Pfeil
- 89: Kolben
- 90: Pfeil
- 92: Pfeil
- 94: Pfeil
- 96: Pfeil
- 98: Pfeil
- 100: Pfeil
- 102: Anschluss an Geber
- 103: Pfeil
- 104: Drosselventil, Drossel
- 106: Anschluss an Reservoir
- 108: Anschlussleitung an den Geber
- 140: Automatisierungseinrichtung

## Patentansprüche

1. Kupplungsbetätigungsvorrichtung, insbesondere für ein Kraftfahrzeug, mit einem einen Geberzylinder (42) aufweisenden Geber (36), mit einem einen Nehmerzylinder (46) aufweisenden Nehmer (38) und mit einer den Geberzylinder (42) und den Nehmerzylinder (46) verbindenden Druckleitung (39) und mit einem mit der Druckleitung (39) verbundenen Reservoir, wobei in der Druckleitung (39) eine Automatisierungseinrichtung (40, 140) angeordnet ist, die zwei voneinander getrennte Fluidkreisläufe (50, 52) aufweist, wobei ein erster Fluidkreislauf (50) für eine manuelle Kupplungsbetätigung eingerichtet ist und der erste Fluidkreislauf (50) zusammen mit einem zweiten Fluidkreislauf (52) für eine automatisierte Kupplungsbetätigung eingerichtet ist und wobei die Automatisierungseinrichtung (40, 140) eine erste Druckkammer (66) mit einem ersten Druckkolben (68) und eine zweite Druckkammer (70) mit einem zweiten Druckkolben (72) aufweist, wobei die erste Druckkammer (66) und die zweite Druckkammer (70) miteinander verbunden sind und wobei der erste Druckkolben (68) durch eine Kraftquelle aktivierbar ist, **dadurch gekennzeichnet, dass** die Automatisierungseinrichtung (40, 140) mindestens zwei Anschlüsse (60, 62, 104) an den Geberzylinder (42) und einen Anschluss (64) an den Nehmerzylinder (46) aufweist.

2. Kupplungsbetätigungsvorrichtung nach Anspruch 1, **dadurch gekennzeichnet, dass** die Automatisierungseinrichtung (40, 140) mindestens ein Überdruckventil (76, 78) aufweist.

3. Kupplungsbetätigungsvorrichtung nach einem der vorhergehenden Ansprüche, **dadurch gekennzeichnet, dass** ein Ventil (80) vorgesehen ist, welches elektrisch ansteuerbar ist, insbesondere öffenbar und/oder schließbar ist, wobei mittels des Ventils (80) die Automatisierungseinrichtung (40, 140) deaktivierbar ist.

4. Kupplungsbetätigungsvorrichtung nach einem der vorhergehenden Ansprüche, **dadurch gekennzeichnet, dass** ein Ventil (81) vorgesehen ist, mittels dem die Automatisierungseinrichtung (40, 140) drucklos schaltbar ist.

5. Kupplungsbetätigungsvorrichtung nach einem der vorhergehenden Ansprüche, **dadurch gekennzeichnet, dass** in der Automatisierungseinrichtung (40, 140) ein Dros-selventil (104) vorgesehen ist, welches mit einer dritten Druckkammer (74) verbunden ist.

6. Kupplungsbetätigungsvorrichtung nach Anspruch 5, **dadurch gekennzeichnet, dass** die zweite Druckkammer (70) und die dritte Druckkammer (74) durch den zweiten Kolben (72) getrennt sind.

7. Kupplungsbetätigungsvorrichtung nach einem der vorhergehenden Ansprüche, **dadurch gekennzeichnet, dass** eine an dem zweiten Kolben (72) zwischen Dichtungen (79) angeordnete Druckkammer (83) vorgesehen ist.

8. Schaltgetriebe, insbesondere für ein Kraftfahrzeug, mit einer insbesondere hydraulischen Kupplungsbetätigungsvorrichtung (34) nach einem der Ansprüche 1 bis 7.

## Claims

1. A clutch actuation device, in particular for a motor vehicle, having a master unit (36) having a master cylinder (42), having a slave unit (38) having a slave cylinder (46) and having a pressure line (39) connecting the master cylinder (42) and the slave cylinder (46) and having a reservoir connected to the pressure line (39), wherein an automation apparatus (40, 140) is arranged in the pressure line (39) and has two fluid circuits (50, 52) separated from one another, wherein a first fluid circuit (50) is configured for a manual clutch actuation and the first fluid circuit (50) together with a second fluid circuit (52) is configured for an automated clutch actuation and wherein the automation apparatus (40, 140) has a first pressure chamber (66) having a first pressure piston (68) and a second pressure chamber (70) having a second pressure piston (72), wherein the first pressure chamber (66) and the second pressure chamber (70) are interconnected and wherein the first pressure piston (68) can be activated by a power source, **characterized in that** the automation apparatus (40, 140) has at least two connections (60, 62, 104) to the master cylinder (42) and one connection (64) to the slave cylinder (46).

2. The clutch actuation device according to claim 1, **characterized in that** the automation apparatus (40, 140) has at least one pressure relief valve (76, 78).

3. The clutch actuation device according to any one of the preceding claims, **characterized in that** a valve (80) is provided which can be electrically controlled, in particular can be opened and/or closed, wherein the automation apparatus (40, 140) can be deactivated by means of the valve (80).

4. The clutch actuation device according to any one of the preceding claims, **characterized in that** a valve (81) is provided, by means of which the automation apparatus (40, 140) can be switched to an unpressurized state.

5. The clutch actuation device according to any one of the preceding claims, **characterized in that** a throttle valve (104), which is connected to a third pressure chamber (74), is provided in the automation apparatus (40, 140).

6. The clutch actuation device according to claim 5, **characterized in that** the second pressure chamber (70) and the third pressure chamber (74) are separated by the second piston (72).

7. The clutch actuation device according to any one of the preceding claims, **characterized in that** a pressure chamber (83) arranged on the second piston (72) between seals (79) is provided.

8. A manual transmission, in particular for a motor vehicle, having an in particular hydraulic clutch actuation device (34) according to any one of claims 1 to 7.

## Revendications

1. Dispositif d'actionnement d'embrayage, en particulier pour véhicule automobile, avec un maître (36) présentant un maître-cylindre (42), avec un esclave (38) présentant un cylindre récepteur (46) et avec une conduite de pression (39) reliant le maître-cylindre (42) et le cylindre récepteur (46) et avec un réservoir relié à la conduite de pression (39), un dispositif d'automatisation (40, 140) présentant deux circuits de fluide séparés (50, 52) étant disposé dans la conduite de pression (39), un premier circuit de fluide (50) pour un actionnement d'embrayage manuel étant établi et le premier circuit de fluide (50) étant conçu conjointement avec un second circuit de fluide (52) pour un actionnement d'embrayage automatisé et le dispositif d'automatisation (40, 140) présentant une première chambre de pression (66) avec un premier piston de pression (68) et une deuxième chambre de pression (70) avec un deuxième piston de pression (72), la première chambre de pression (66) et la deuxième chambre de pression (70) étant interconnectées et le premier piston de pression (68) pouvant être actionné par une source d'alimentation, **caractérisé en ce que** le dispositif d'automatisation (40, 140) présente au moins deux connexions (60, 62, 104) au maître-cylindre (42) et une connexion (64) au cylindre récepteur (46).

2. Dispositif d'actionnement d'embrayage selon la revendication 1, **caractérisé en ce que** le dispositif d'automatisation (40, 140) présente au moins un limiteur de pression (76, 78).

3. Dispositif d'actionnement d'embrayage selon l'une quelconque des revendications précédentes, **caractérisé en ce qu'**est prévue une soupape (80) qui peut être commandée électriquement, notamment ouverte et/ou fermée, le dispositif d'automatisation (40, 140) pouvant être désactivé au moyen de la soupape (80).

4. Dispositif d'actionnement d'embrayage selon l'une quelconque des revendications précédentes, **caractérisé en ce qu'**est prévue une soupape (81) au moyen de laquelle le dispositif d'automatisation (40, 140) peut être commuté dans un état dépressurisé.

5. Dispositif d'actionnement d'embrayage selon l'une quelconque des revendications précédentes, **caractérisé en ce qu'**une soupape d'étranglement (104) reliée à une troisième chambre de pression (74) est prévue dans le dispositif d'automatisation (40, 140).

6. Dispositif d'actionnement d'embrayage selon la revendication 5, **caractérisé en ce que** la deuxième chambre de pression (70) et la troisième chambre de pression (74) sont séparées par le deuxième piston (72).

7. Dispositif d'actionnement d'embrayage selon l'une quelconque des revendications précédentes, **caractérisé en ce qu'**est prévue une chambre de pression (83) disposée sur le deuxième piston (72) entre des joints (79).

8. Boîte de vitesses, notamment pour véhicule automobile, avec un dispositif d'actionnement d'embrayage (34) en particulier hydraulique selon l'une quelconque des revendications 1 à 7.
